# EUROPEAN PATENT APPLICATION

(11) **EP 4 629 413 A1**
(43) Date of publication of application: **08.10.2025**
(21) Application number: 23897302.8
(22) Date of filing: 20.10.2023
(51) Int. Cl.: H01M 50/204, H01M 10/643, H01M 10/658, H01M 50/213, H01M 50/291, H01M 50/293, H01M 50/342, H01M 50/367, H01M 50/383

(54) **BATTERY PACK**

(30) Priority: 30.11.2022 JP 2022191568
(71) Applicant: Panasonic Energy Co., Ltd., Osaka 570-8511 (JP)
(72) Inventor: IDEGUCHI, Kazuhisa, Kadoma-shi, Osaka 571-0057 (JP)
(74) Representative: Eisenführ Speiser
(86) International application number: PCT/JP2023/038035
(87) International publication number: WO 2024/116645

(57) **Abstract**

A battery pack includes a thinner foam sheet that evaporates to absorb heat energy from a substance discharged from a battery cell undergoing thermal runaway and prevents thermal issues caused by the jet substance. The battery pack includes a battery block (10) and an outer case (2) accommodates the battery block (10). The battery block (10) includes battery cells (1) including discharge valves (12) having openings (12a) for the release substance on first end faces (15) of the battery cells (1). The outer case (2) has a discharge duct (20) that discharges a jet substance discharged through the openings (12a) of the discharge valves (12) outside the case. A flame-retardant sheet (4) between the discharge duct (20) and the first end faces (15) includes a flame-retardant foam sheet (41) and a non-foam film (42) stacked on a surface of the foam sheet (41). The non-foam film (42) has higher heat resistance and is thinner than the foam sheet (41). The non-foam film (42) faces the first end faces (15). The foam sheet (41) faces the discharge duct (20). The flame-retardant sheet (4) has, in portions facing the first end faces (15), through-holes (45) through which the jet substance passes.

## Description

### FIELD

The present invention relates to a battery pack including an outer case accommodating battery cells including discharge valves.

### BACKGROUND

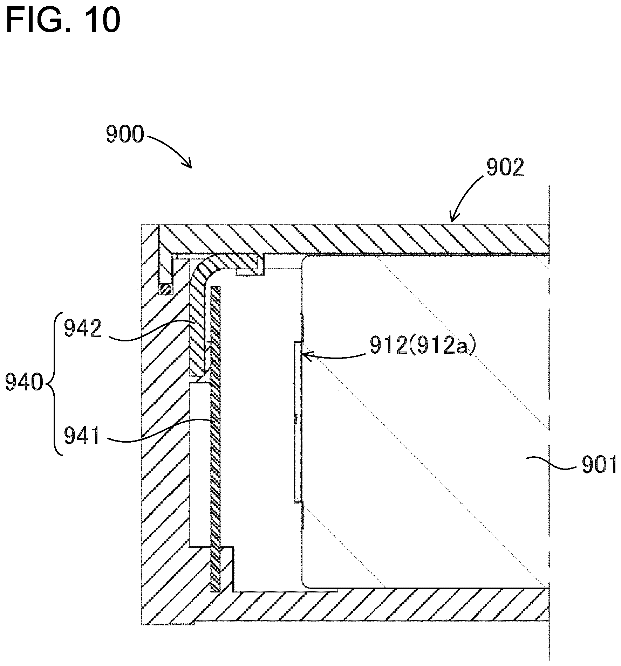

A battery cell with a discharge valve that opens in response to an abnormality can prevent the battery case from bursting. The discharge valve opens when the battery cell undergoes thermal runaway and has the internal pressure exceeding a threshold. The battery cell undergoing thermal runaway discharges a jet substance with abnormally high temperature and pressure, causing various thermal issues. Such issues caused by thermal runaway may include escalation of thermal runaway and discharge of the high-temperature jet substance outside the outer case. The escalation of thermal runaway occurs under increased heat energy from thermal runaway of other battery cells, induced from the battery cell undergoing thermal runaway. The above thermal issues can be eliminated by lowering the energy from the jet substance before the substance is discharged outside the outer case. A battery pack 900 in FIG. 10 includes a heat-resistant plate 940 on an inner surface of an outer case 902 to prevent a high-temperature, high-pressure jet substance discharged through a discharge valve 912 in a battery cell 901 from damaging a part of the outer case 902 when the jet substance is discharged outside the outer case 902 (refer to Patent Literature 1).

### CITATION LIST

### PATENT LITERATURE

Patent Literature 1: Japanese Unexamined Patent Application Publication No. 2021-150082

### BRIEF SUMMARY

### TECHNICAL PROBLEM

The battery pack 900 shown in the cross-sectional view in FIG. 10 includes a flat heat-resistant plate 941 inside the outer case 902 at a position facing the electrode end face of the battery cell 901 having an opening 912a of the discharge valve 912, and an L-shaped heat-resistant plate 942 at a corner of the outer case 902. The battery pack 900 with this structure includes two heat-resistant plates 940 to prevent damage on the outer case 902 caused by heat from the high-temperature jet substance, increasing the component cost. The battery pack 900 also has a complex structure and a complex assembly process for placing the two heat-resistant plates 940 in position inside the outer case 902, increasing the manufacture cost. The battery pack 900 further includes a space for incorporating the two heat-resistant plates 940, increasing the external size of the outer case 902.

In response to the above issues, the inventor has developed a battery pack including, at an opening of a discharge valve in a battery cell, a flame-retardant foam layer that absorbs heat energy and evaporates to allow safe discharge of a jet substance outside an outer case. This battery pack can avoid thermal issues caused by thermal runaway with the foam layer evaporating to absorb the heat energy and lower the temperature of the jet substance, guiding the jet substance with a lowered temperature to a discharge duct, and discharging the jet substance outside the case. The battery pack thus includes no heat-resistant plate with high heat resistance, such as a metal plate or a ceramic plate, unlike known battery packs. A foam layer that absorbs more heat energy from such a jet substance is to have a larger volume to evaporate. Thus, a thicker foam layer with a larger volume to evaporate is to be used for this battery pack. The battery pack can have an outer case with an increased external size to accommodate such a thicker foam layer. The thicker foam layer further increases the component cost. Additionally, the foam layer is to be formed from a material with specific property, or a flame-retardant material, to evaporate without igniting, thus increasing the component cost.

In response to the above issues associated with battery packs, one or more aspects of the present invention are directed to a battery pack including a thinner flame-retardant foam layer to prevent thermal issues caused by a jet substance discharged from battery cells undergoing thermal runaway.

### SOLUTION TO PROBLEM

A battery pack according to an aspect of the present invention includes a battery block and an outer case. The battery block includes a plurality of battery cells including discharge valves having openings on first end faces of the plurality of battery cells. The outer case accommodates the battery block. The outer case has a discharge duct and a flame-retardant sheet. The discharge duct is between the outer case and the first end faces of the plurality of battery cells. The discharge duct is a duct for a jet substance discharged through the openings of the discharge valves. The flame-retardant sheet is between the discharge duct and the first end faces of the plurality of battery cells. The flame-retardant sheet is a multilayer sheet including a foam sheet being flame retardant and a non-foam film stacked on a surface of the foam sheet. The non-foam film is flame retardant, has higher heat resistance than the foam sheet, and is thinner than the foam sheet. The flame-retardant sheet has, in portions of the flame-retardant sheet facing the openings of the discharge valves, through-holes through which the jet substance passes. The non-foam film in the flame-retardant sheet faces the first end faces of the plurality of battery cells. The foam sheet in the flame-retardant sheet faces the discharge duct.

### ADVANTAGEOUS EFFECTS

The above battery pack includes the thinner flame-retardant foam layer and can prevent thermal issues caused by the jet substance discharged from the battery cell undergoing thermal runaway. With the battery pack including the thinner foam layer, the outer case can be compact. The battery pack is also safe while having a larger charge and discharge capacity relative to its volume.

### BRIEF DESCRIPTION OF DRAWINGS

FIG. 1 is a perspective view of a battery pack according to a first embodiment of the present invention.
FIG. 2 is an exploded perspective view of the battery pack in FIG. 1, showing an outer case being attached.
FIG. 3 is an exploded perspective view of the battery pack in FIG. 2, showing fireproof sheets being attached.
FIG. 4 is an exploded perspective view of the battery pack in FIG. 1.
FIG. 5 is an exploded perspective view of the battery pack in FIG. 4, showing a battery holder being attached.
FIG. 6 is a cross-sectional view of the battery pack taken along line VI-VI in FIG. 1.
FIG. 7 is an enlarged cross-sectional view of a main part of the battery pack in FIG. 6.
FIG. 8 is an enlarged perspective view of the main part of the battery pack in FIG. 6.
FIG. 9 is a schematic diagram showing flow paths of a jet substance.
FIG. 10 is a cross-sectional view of a known example battery pack.

### DETAILED DESCRIPTION

A battery pack according to one embodiment of the present invention includes a battery block and an outer case. The battery block includes a plurality of battery cells including discharge valves having openings on first end faces of the plurality of battery cells. The outer case accommodates the battery block. The outer case has a discharge duct and a flame-retardant sheet. The discharge duct is between the outer case and the first end faces of the plurality of battery cells. The discharge duct is a duct for a jet substance discharged through the openings of the discharge valves. The flame-retardant sheet is between the discharge duct and the first end faces of the plurality of battery cells. The flame-retardant sheet is a multilayer sheet including a foam sheet being flame retardant and a non-foam film stacked on a surface of the foam sheet. The non-foam film is flame retardant, has higher heat resistance than the foam sheet, and is thinner than the foam sheet. The flame-retardant sheet has, in portions of the flame-retardant sheet facing the openings of the discharge valves, through-holes through which the jet substance passes. The non-foam film in the flame-retardant sheet faces the first end faces of the plurality of battery cells. The foam sheet in the flame-retardant sheet faces the discharge duct.

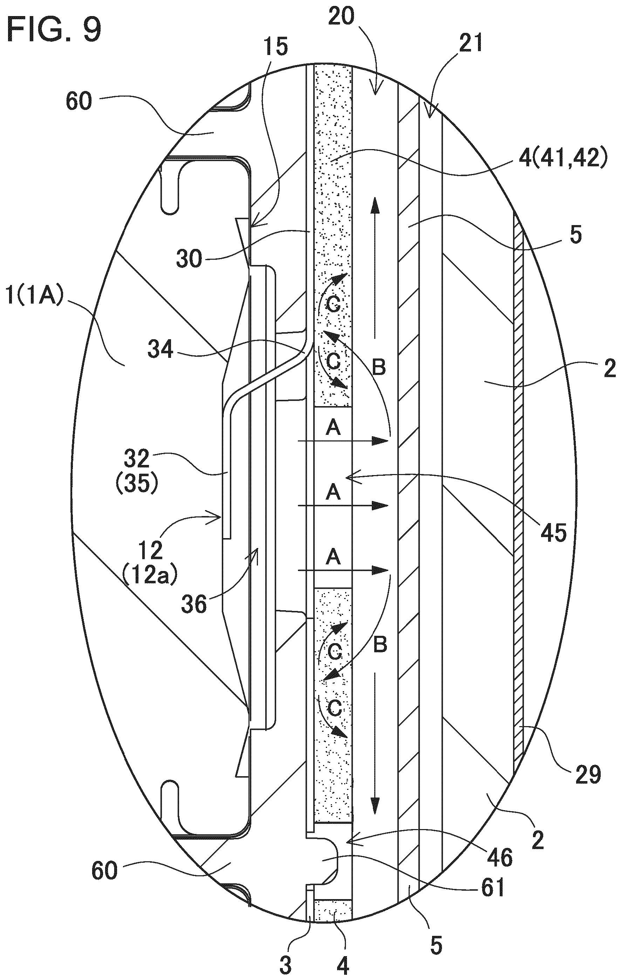

The above battery pack includes the thin flame-retardant sheet at a position facing the openings of the discharge valves in the battery cells to prevent thermal issues caused by the high-temperature, high-pressure jet substance discharged from a battery cell undergoing thermal runaway. FIG. 9 is a partly enlarged cross-sectional view of the battery pack 100, showing a first end face 15 of a battery cell 1, a flame-retardant sheet 4, and a discharge duct 20. The figure shows the flow paths of a jet substance discharged from the battery cell 1 undergoing thermal runaway with arrows A, B, and C. The jet substance discharged through an opening 12a of a discharge valve 12 in the battery cell 1 is blown through a through-hole 45 in the flame-retardant sheet 4 to the discharge duct 20 as indicated by the arrows A. The jet substance blown to the discharge duct 20 collides with an inner surface of the discharge duct 20, and is reflected and redirected to be blown onto the surface of a foam sheet 41 on the flame-retardant sheet 4 as indicated by the arrows B. The high-temperature jet substance blown onto the surface of the foam sheet 41 causes the foam sheet 41 to melt and evaporate through its surface to move inside the foam sheet 41 and to the surface of a non-foam film 42 stacked on the back surface of the foam sheet 41. The foam sheet 41 has a three-dimensional shape in which numerous cells are defined with flame-retardant thin films. The foam sheet 41 has an extra low density due to the numerous cells inside, and rapidly melts and evaporates with the jet substance blown onto the surface of the foam sheet 41, causing the jet substance to move to the surface of the non-foam film 42. As indicated by the arrows C, the jet substance moving to the surface of the non-foam film 42 collides with the surface of the non-foam film 42, diffuse, and is reflected to cause melting and evaporation in a large area inside the foam sheet 41 and move to the surface of the foam sheet 41. The non-foam film 42 is a sheet without cells and has higher heat resistance than the foam sheet 41. The non-foam film 42 reflects the jet substance blown onto the surface of the foam sheet 41 through the foam sheet 41 toward the foam sheet 41. The non-foam film 42 may be, for example, a polyimide sheet that melts and evaporates over time with heat energy from the jet substance, after reflecting the jet substance on its surface.

The jet substance discharged from the battery cell passes through the through-hole in the flame-retardant sheet, is reflected from the discharge duct, and evaporates the foam sheet inward through its surface to move toward the first end face of the battery cell. However, the above flame-retardant sheet reflects the jet substance with the non-foam film with high heat resistance located between the flame-retardant sheet and the first end face of the battery cell, thus preventing thermal issues on the first end face of the battery cell caused by the jet substance. The jet substance reflected from the non-foam film and diffused into a larger area moves in the opposite direction toward the surface of the foam sheet and causes a large area of the foam sheet to evaporate, causing a notably large area of the flame-retardant sheet to evaporate. The jet substance causes a large area of the flame-retardant sheet with a large volume to evaporate and loses heat energy, lowering its temperature. The jet substance with a lower temperature is discharged outside the outer case without causing thermal issues to the discharge duct or the outer case. The jet substance with a lower temperature does not ignite with air when discharged outside the outer case, and can eliminate thermal issues outside the outer case.

As described above, the flame-retardant sheet between the discharge duct and the first end face of the battery cell prevents the thermal issue caused by the high-temperature jet substance discharged from the battery cell undergoing thermal runaway and overheating adjacent battery cells to induce their thermal runaway. For a battery pack, induction of thermal runaway is to be prevented for safety, in particular. A battery cell undergoing thermal runaway may forcefully discharge a high-temperature jet substance and cause the thermal runaway of adjacent battery cells. Although a battery pack with a structure including a heat-resistant member with high heat resistance can absorb heat from the jet substance and prevent thermal runaway, such a heat-resistant member is to be placed at a specific position. A battery pack can absorb heat energy from the jet substance by burning a flame-retardant sheet formed from a flame-retardant foam body and prevent induction of thermal runaway. However, the battery pack with this structure includes a thicker flame-retardant sheet formed from a foam body to increase the heat energy absorbed by burning the flame-retardant sheet and thus has a larger outer case for the flame-retardant sheet with a larger volume. The battery pack used for various applications is to have a minimum external size and maximum charge and discharge capacity to have a higher capacity relative to the volume. The thicker flame-retardant sheet cannot avoid a decrease in the charge and discharge capacity relative to the volume for the battery pack.

The battery pack according to the above embodiment includes a thinner flame-retardant sheet to prevent thermal runaway of the battery cell, and thus can have a smaller outer case and a larger charge and discharge capacity. The above feature is achieved by a specific stacked structure including a thinner flame-retardant sheet with a larger volume for burning.

In a battery pack according to another embodiment of the present invention, the foam sheet may be a foam body including closed cells.

The above battery pack includes a still thinner foam sheet in the flame-retardant sheet to prevent thermal issues for the battery pack caused by the high-temperature, high-pressure jet substance more effectively. The closed-cell foam sheet has higher heat resistance with numerous closed cells each defining an independent closed space surrounded by flame-retardant thin films inside the foam sheet. The jet substance passing through the foam sheet while melting and evaporating the foam sheet cannot permeate the cells without evaporating the flame-retardant thin films surrounding the cells, unlike open-cell foam layers. The jet substance thus evaporates the thin films defining the cells and permeates the cells to evaporate and permeate the foam sheet.

The above battery pack can further have higher impact strength and vibration resistance with the flame-retardant sheet between the outer case and the battery block, or more specifically, with the cushiony foam sheet including closed cells.

In a battery pack according to another embodiment of the present invention, the foam sheet may be a foam body of heat-resistant rubber. The above battery pack can have higher impact strength and vibration resistance with the elasticity of the heat-resistant rubber used for the foam sheet.

In a battery pack according to another embodiment of the present invention, the foam sheet may be a foam body of chloroprene rubber. The above battery pack includes the flame-retardant sheet foam including the foam sheet of chloroprene rubber with high mechanical strength, weather resistance, heat resistance, cold resistance, and oil resistance, and can thus be used stably in various environments under different external conditions.

In a battery pack according to another embodiment of the present invention, the foam sheet may be a foam body of silicone rubber. The above battery pack includes the foam sheet of silicone rubber with particularly high cold resistance and heat resistance, and can thus be used stably in various external temperature environments.

In a battery pack according to another embodiment of the present invention, the non-foam film may be a polyimide film. The flame-retardant sheet including the non-foam film of polyimide with the heat resistance temperature of 450 °C or higher can stably reflect and diffuse the jet substance that melts and evaporates the foam sheet and is blown onto the surface of the foam sheet to increase the area of the foam sheet for evaporation. The thin flame-retardant sheet can thus stably prevent the jet substance from causing thermal issues.

In a battery pack according to another embodiment of the present invention, the non-foam film may be a fluororesin film.

In a battery pack according to another embodiment of the present invention, the foam sheet may have a thickness of 2 mm or less.

In a battery pack according to another embodiment of the present invention, the non-foam film may have a thickness of 200 µm or less.

In a battery pack according to another embodiment of the present invention, the flame-retardant sheet may include the foam sheet and the non-foam film that evaporate with the jet substance to absorb heat energy.

In a battery pack according to another embodiment of the present invention, the outer case may include a fireproof sheet adjacent to the discharge duct, and the discharge duct may be between the fireproof sheet and the flame-retardant sheet. The above battery pack can protect the outer case from the high-temperature jet substance flowing into the discharge duct and prevent damage on the outer case caused by the jet substance.

In a battery pack according to another embodiment of the present invention, the outer case may include a fireproof sheet adjacent to the discharge duct. The discharge duct may be between the fireproof sheet and the flame-retardant sheet. The outer case may include an outer discharge duct between the fireproof sheet and an inner surface of the outer case. The fireproof sheet may have a transmission hole through which the jet substance discharged through the discharge duct is guided to the outer discharge duct. The above battery pack can protect the outer case from the high-temperature jet substance flowing into the discharge duct and prevent damage on the outer case caused by the jet substance more reliably.

In a battery pack according to another embodiment of the present invention, the battery block may include a battery holder holding the plurality of battery cells in position. The flame-retardant sheet may have a cutout clearance between adjacent battery cells of the multiple battery cells. The battery holder may include a partition wall integral with the battery holder. The partition wall may be guided by the cutout clearance. The above battery pack including, in addition to the flame-retardant sheet, the battery holder including the partition wall between the battery cells can prevent induction of thermal runaway of the adjacent battery cells more reliably and achieve higher safety.

One or more embodiments of the present invention will now be described in detail with reference to the drawings. Terms indicating specific directions or positions (e.g., upward, downward, and other terms including the terms) are used hereafter as appropriate to facilitate understanding of the present invention with reference to the drawings, and do not limit the technical scope of the present invention. The same reference numerals denote the same or similar parts or components in the drawings.
One or more embodiments described below are mere examples of the technical ideas of the present invention, and the present invention is not limited to the embodiments described below. The dimensions, materials, shapes, and relative positions of the components described below are mere examples and are not intended to limit the scope of the present invention, unless otherwise specified. An embodiment or an example described below may be applicable to other embodiments or examples. The sizes and the positional relationships of the components shown in the drawings may be exaggerated for clarity.

### First Embodiment

A battery pack using nonaqueous secondary batteries such as lithium-ion battery cells can be lighter and can have higher capacity. Such a battery pack includes discharge valves to prevent the battery cells from bursting when an abnormal use of the battery pack increases the internal pressures of the battery cells. Each discharge valve opens to discharge a jet substance through its opening when the internal pressure exceeds a threshold. The jet substance discharged from a battery cell has a high temperature and a high pressure, and may cause various thermal issues. Examples of the thermal issues caused by the jet substance include damage on an outer case caused by heat from induced thermal runaway of adjacent battery cells, and ignition of the high-temperature jet substance discharged outside the outer case.

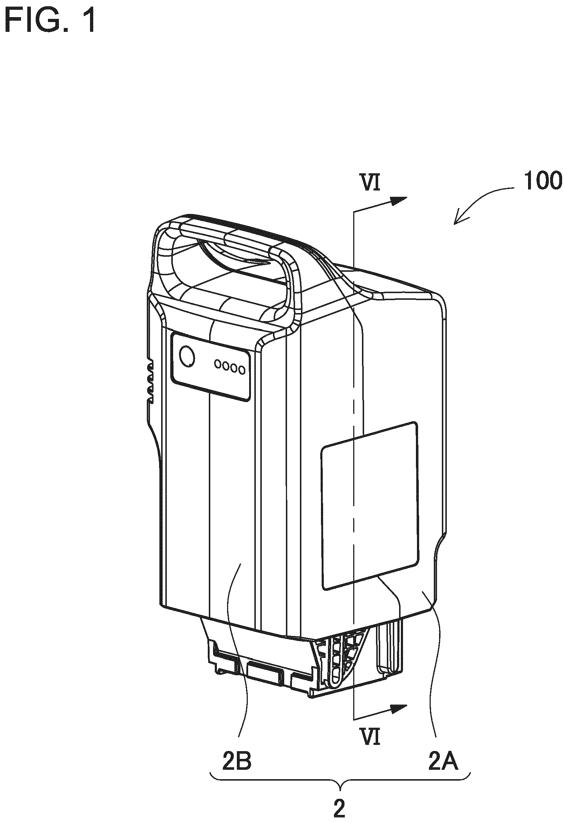

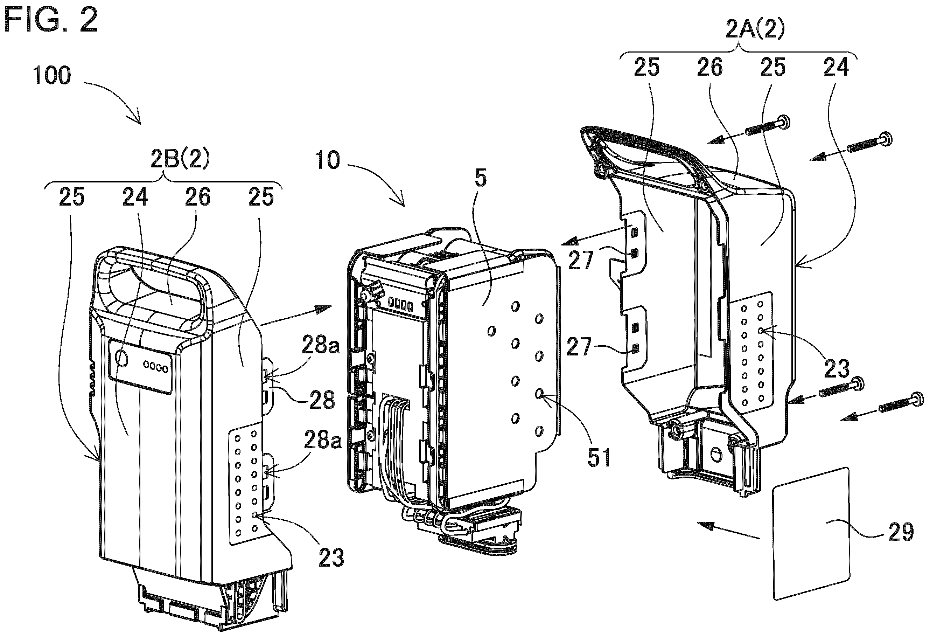

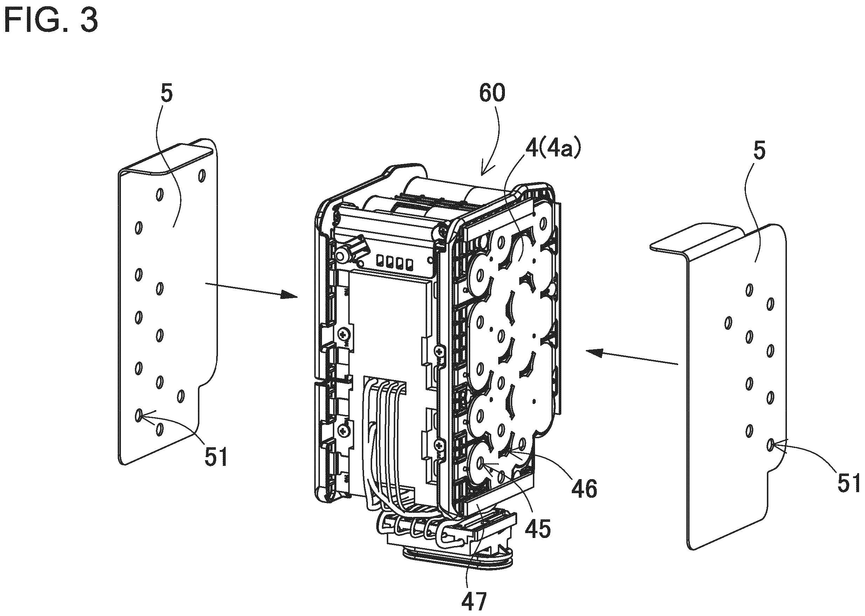

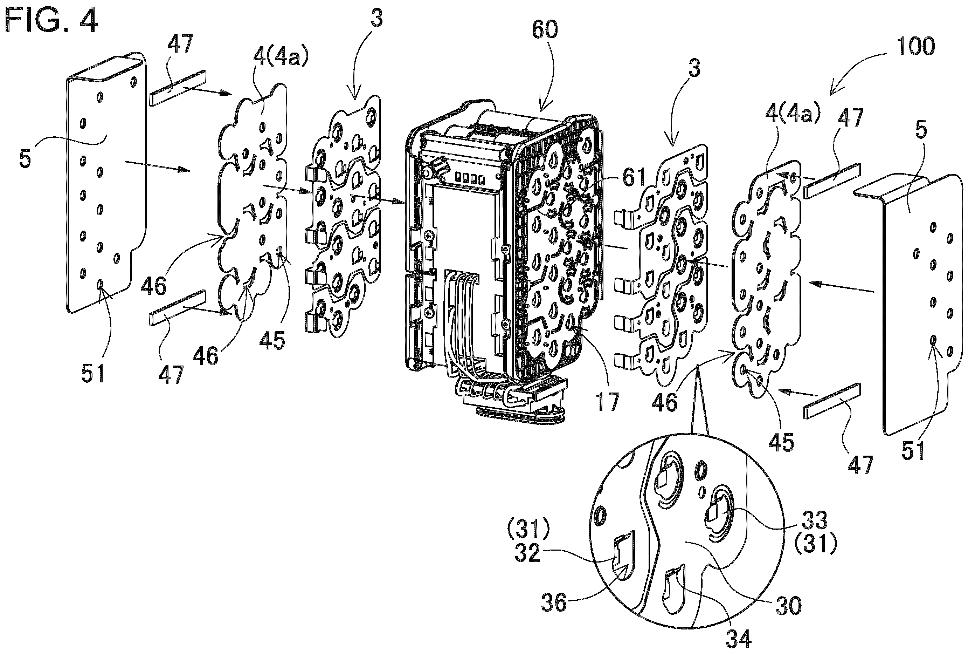

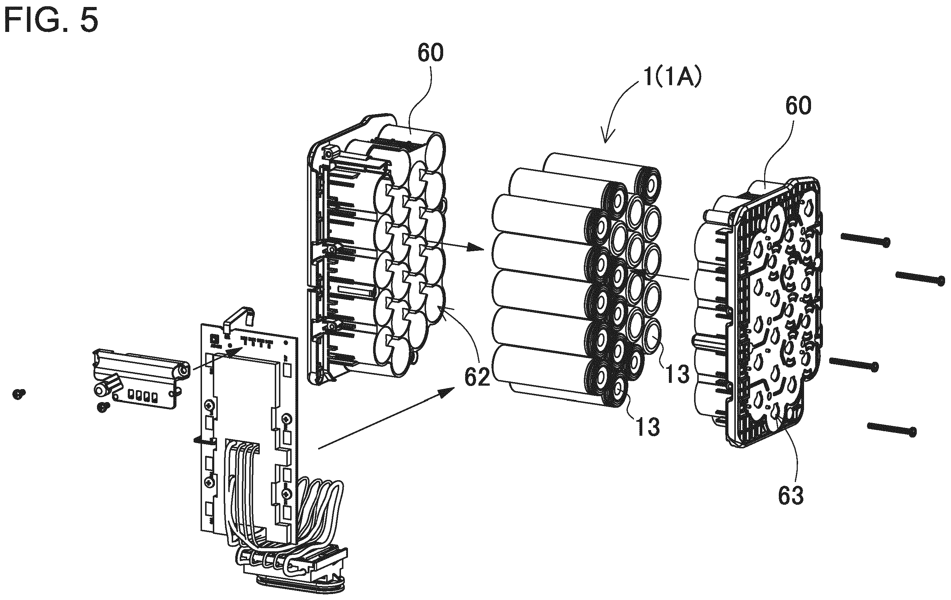

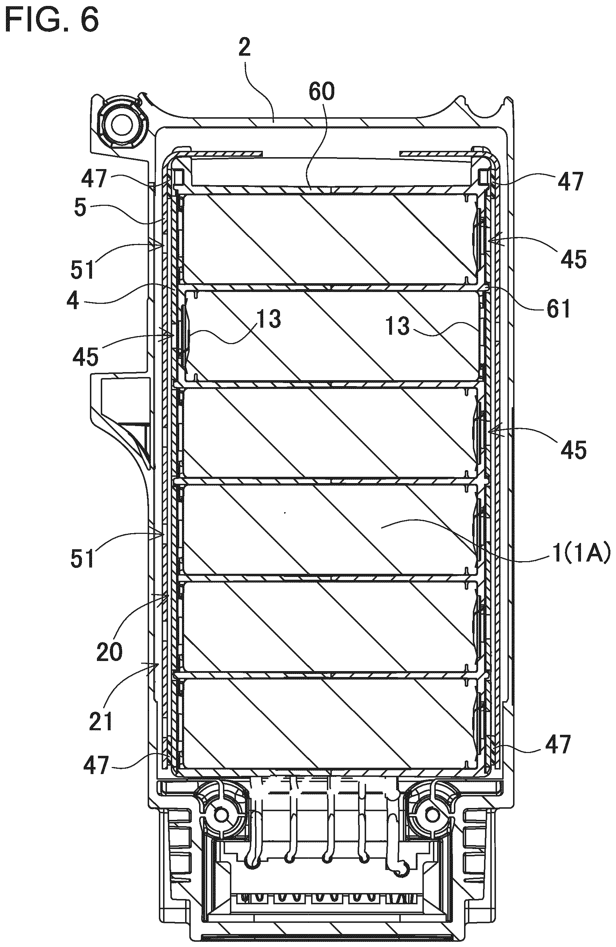

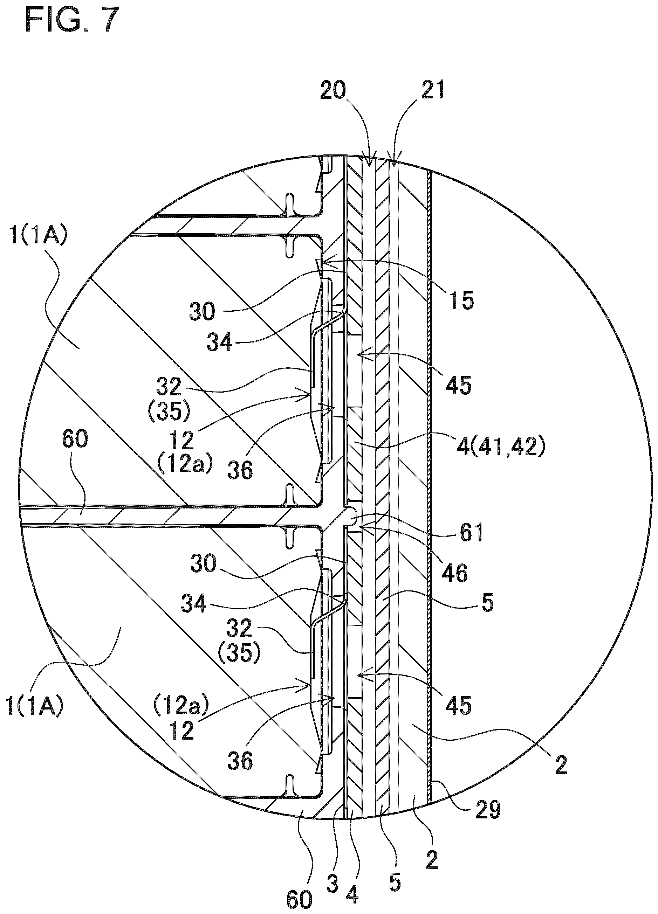

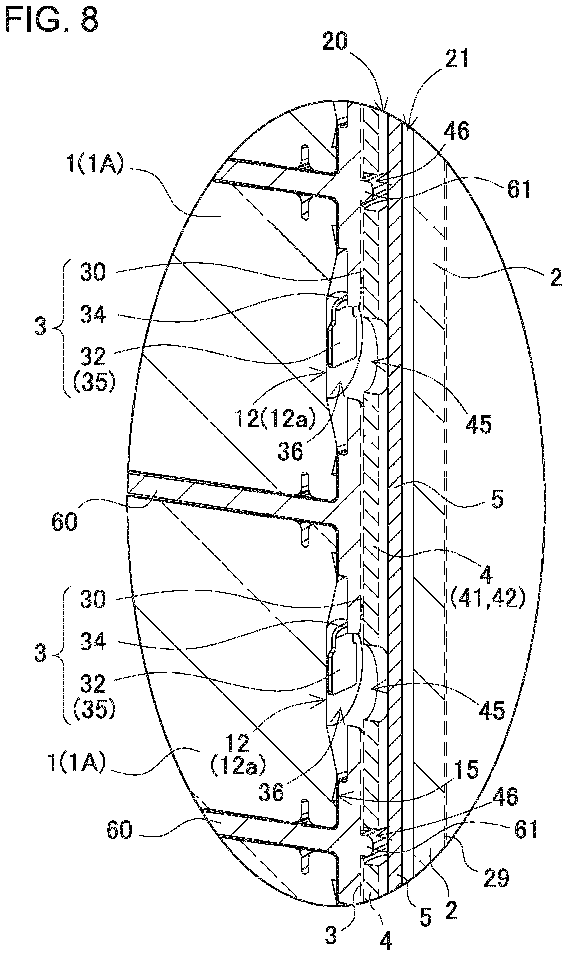

A battery pack 100 according to a first embodiment of the present invention is shown in FIGs. 1 to 9. FIG. 1 is a perspective view of the battery pack 100. FIG. 2 is an exploded perspective view of the battery pack 100 with an outer case 2 being attached. FIG. 3 is an exploded perspective view of the battery pack 100 with fireproof sheets being attached. FIG. 4 is an exploded perspective view of the battery pack 100 in FIG. 1. FIG. 5 is an exploded perspective view of the battery pack 100 with battery cells 1 being attached to a battery holder 60. FIG. 6 is a cross-sectional view of the battery pack 100 taken along line VI-VI in FIG. 1. FIGs. 7 and 8 are enlarged views of a main part of the battery pack 100 in FIG. 6. FIG. 9 is a schematic diagram showing flow paths of a jet substance discharged through an opening 12a of a discharge valve 12 in one of the battery cells 1.

The battery pack 100 includes a battery block 10 including the multiple battery cells 1, and the outer case 2 having a closed structure and accommodating the battery block 10 inside. The outer case 2 includes discharge ducts 20 between the outer case 2 and the battery block 10 to discharge the jet substance discharged from the battery cells 1 outside the case. The outer case 2 includes a flame-retardant sheet 4 between each discharge duct 20 and the battery block 10. The flame-retardant sheet 4 located inside the outer case 2 does not ignite with the high-temperature, high-pressure jet substance discharged from a battery cell 1 undergoing thermal runaway. This thin flame-retardant sheet 4 thus prevents various thermal issues and allows the jet substance to be safely discharged through the discharge duct 20.

### Battery Block 10

The battery block 10 includes the battery holder 60 holding the multiple battery cells 1 in position, and lead plates 3 connecting the battery cells 1 in parallel or in series. Each battery cell 1 may be a lithium-ion battery with a larger charge and discharge capacity relative to its weight and volume. The battery pack 100 including the lithium-ion batteries can have a smaller external size, a lighter weight, and a larger charge and discharge capacity. However, the battery pack according to one or more embodiments of the present invention may include other battery cells than the lithium-ion batteries, and may include other secondary batteries, or for example, any other rechargeable batteries such as nonaqueous electrolyte secondary batteries or solid-state batteries.

Each battery cell 1 includes positive and negative electrodes 13 on its two ends. Each battery cell 1 shown in FIG. 5 is a cylindrical battery 1A with the opening 12a of the discharge valve 12 located in its first end face 15. The battery cell 1 includes the first end face 15 as a discharge end face for the jet substance, and includes an end face opposite to the first end face 15 as a non-discharge end face that has no opening 12a of the discharge valve 12 and thus discharges no jet substance. Although the battery block 10 shown in FIG. 5 includes the battery cells 1 that are the cylindrical batteries 1A, the battery cells 1 are not limited to the cylindrical batteries 1A and may be any batteries each having the opening 12a of the discharge valve 12 in the first end face 15, such as rectangular batteries. Each cylindrical battery includes an exterior can formed by pressing a metal plate. The exterior can has an opening that is hermetically sealed with a seal plate. The seal plate has the opening 12a of the discharge valve 12 to be the first end face 15 of the corresponding battery cell 1. The battery cell 1 may have the opening 12a of the discharge valve 12 in a bottom plate of the exterior can. The battery cell 1 may thus include the bottom plate of the exterior can with the opening 12a of the discharge valve 12 as the first end face 15.

The battery block 10 shown in FIG. 4 have the battery cells 1 arranged in parallel, with the electrodes 13 on each of the two ends of the battery cells 1 arranged on the same plane. The battery block 10 includes the lead plates 3 on sides of surfaces of the battery block 10 opposite to the sides of the surfaces on which the electrodes 13 in the battery cells 1 are arranged on the same plane. The battery block 10 have the discharge end faces and the non-discharge end faces of the battery cells 1 on the same plane to connect the battery cells 1 in parallel and in series with a single lead plate 3. Each lead plate 3 includes connection arms 31 connected to the positive or negative electrodes 13 in the battery cells 1. The lead plate 3 is shaped by cutting a metal plate and bending the cut metal plate to form the connection arms 31 connected to a flat lead body 30. The lead plate 3 includes the lead body 30 and the connection arms 31, with outer peripheries of the connection arms 31 except connecting portions connecting the lead body 30 and the connection arms 31 cut off. Each connection arm 31 includes a weld 35 protruding and connected to the corresponding electrode 13 in the battery cell 1 to leave a clearance between the connection arm 31 and the lead body 30. The connection arm 31 guides the weld 35 to an electrode opening in the battery holder 60 to connect the weld 35 to the corresponding electrode 13 in the battery cell 1.

Each lead plate 3 in FIG. 4 includes first connection arms 32 connected to seal plate electrodes in the respective battery cells 1 and second connection arms 33 connected to bottom electrodes in the respective battery cells 1. Each battery cell 1 includes, as the first end face 15, an end face including the seal plate electrode and the opening 12a of the discharge valve 12. The lead plate 3 allows the jet substance discharged from the battery cell 1 to pass through the clearance between the first connection arm 32 connected to the seal plate electrode on the first end face 15 and the lead body 3, or in other words, through a passage clearance 36 for the jet substance. Each first connection arm 32 connects a connecting portion 34 at its basal end to the lead body 30 and allows the weld 35 to protrude to the corresponding electrode 13 to leave the larger passage clearance 36 for the jet substance.

The battery block 10 shown in FIG. 4 includes seven parallel units of three battery cells 1 connected in parallel with the corresponding lead plate 3. The seven parallel units are connected in series with the lead plates 3 connecting the battery cells 1 in parallel. The battery block 10 includes 21 battery cells 1 connected with eight lead plates to have every three in parallel as a unit and the seven units in series. The battery block 10 includes four lead plates 3 on each of its right and left side surfaces. Three of the four lead plates connect the respective three battery cells 1 in parallel as a parallel unit, and connect the resultant parallel units in series. The remaining one lead plate connects three battery cells 1 in parallel as an output terminal of the battery block 10.

As shown in the exploded perspective view in FIG. 5, the battery block 10 includes the multiple battery cells 1 placed and held in position in the battery holder 60 to be positioned without displacement. The battery holder 60 is formed from thermoplastics and holds the battery cells 1 in parallel with electrode end faces of the battery cells 1 on the same planes. The thermoplastics for the battery holder 60 may be polycarbonate with higher strength and heat resistance. However, the battery holder may be formed from other thermoplastics with higher strength and heat resistance. The battery holder 60 in FIG. 5 includes insertion cylinders 62 to hold the battery cells 1 in position. As shown in the exploded perspective view in FIG. 4, the battery holder 60 has, in its electrode mount surfaces on which the lead plates 3 are located, electrode openings 63 through which the electrodes 13 in the battery cells 1 are exposed. The lead plates 3 connect, with a method such as welding, the connection arms 31 to the respective electrodes 13 in the battery cells 1 exposed through the electrode openings 63.

The battery holder 60 shown in FIG. 7 includes, on its electrode mount surfaces on which the electrodes 13 are located, partition walls 61 guided to the cutout clearances 46 between adjacent lead plates 3. The partition walls 61 are guided to the clearances between adjacent lead plates 3 to insulate the adjacent lead plates 3 having different potentials.

### Outer Case 2

The outer case 2 is formed by, for example, molding thermoplastics. The plastics for the outer case 2 may be thermoplastics with high heat resistance and strength, such as high-density polyethylene, polypropylene, polyimide, or polycarbonate. The outer case 2 shown in the exploded perspective view in FIG. 2 includes a pair of divisional cases 2A and 2B joined together at their opening edges and accommodating the battery block 10 inside. Each of the divisional cases 2A and 2B is formed by molding plastic into a box including a surface plate 24 and peripheral walls connected to the surface plate 24. The peripheral walls include side plates 25 and an end face plate 26. The divisional cases 2A and 2B in FIG. 2 have the opening edges of their side plates 25 joined together with an engagement structure. The engagement structure includes engagement protrusions 27 on inner surfaces of the side plates 25 in the divisional case 2A, and joint tabs 28 protruding from outer peripheral edges of the side plates 25 in the divisional case 2B to engage with the engagement protrusions 27. Each joint tab 28 has engagement holes 28a to guide and engage with the respective engagement protrusions 27. The divisional cases 2A and 2B are joined together by placing the joint tabs 28 on the divisional case 2B along the inner surfaces of the side plates 25 in the divisional case 2A, and guiding the engagement protrusions 27 through the respective engagement holes 28a for engagement. The outer case 2 in the figure includes the divisional case 2B including two pairs of joint tabs 28 on each of the two side plates 25 to securely join the pair of divisional cases 2A and 2B without displacement. This structure allows the divisional cases 2A and 2B to be joined together without being disengaged easily. However, the outer case 2 in one or more embodiments of the present invention is not limited to this structure, and may be any outer case with a structure that can accommodate the battery block 10 inside and close its openings as a closed structure.

The outer case 2 includes the discharge duct 20 on its inner surfaces to guide the jet substance outside. Each discharge duct 20 is a clearance for guiding and discharging the jet substance discharged through the opening 12a of the discharge valve 12. The discharge duct 20 is located between the outer case 2 and the first end face 15 of the battery cell 1, and discharges the jet substance discharged through the opening 12a of the discharge valve 12 outside the outer case 2. In the battery block 10 shown in the exploded perspective view in FIG. 2, the discharge ducts 20 are located inward from the side plates 25. However, the discharge ducts 20 are not limited to this example. The discharge ducts 20 receive the jet substance with the heat energy absorbed by the flame-retardant sheet 4 (described later) and discharge the jet substance outside the outer case 2. The outer case 2 has multiple discharge openings 23 for discharging the jet substance flowing through the discharge ducts 20 outside the outer case 2. Each discharge duct 20 reflects the jet substance passing through through-holes 45 in the corresponding flame-retardant sheet 4 and blows the jet substance onto the surface of the foam sheet 41 to cause the flame-retardant sheet 4 to melt and evaporate. The discharge duct 20 may have a size of, for example, 0.5 to 2 mm inclusive, or more specifically, 0.7 to 1.5 mm inclusive. The discharge duct 20 being too narrow causes a greater pressure drop in the jet substance and is less likely to discharge the jet substance from the outer case 2 smoothly. The discharge duct 20 being too wide causes a smaller pressure drop and is less likely to reflect the jet substance passing through the through-holes 45 in the flame-retardant sheet 4 efficiently, and thus is less likely to cause the flame-retardant sheet 4 to melt and evaporate. Such a discharge duct 20 is thus less likely to lower the heat energy from the jet substance efficiently.

The battery pack 100 shown in the exploded perspective view in FIG. 4 includes a fireproof sheet 5 adjacent to each discharge duct 20. Each fireproof sheet 5 protects the outer case 2 from the jet substance passing through the through-holes 45 in the corresponding flame-retardant sheet 4. The fireproof sheet 5 may be a heat-resistant sheet, such as a silica cloth sheet, that does not ignite when the jet substance is blown onto the sheet. The battery pack 100 shown in the enlarged cross-sectional view in FIG. 9 has, as the discharge ducts 20, clearances between each fireproof sheet 5 and the corresponding flame-retardant sheet 4. Each clearance between the fireproof sheet 5 and the flame-retardant sheet 4 is defined with supports 47 located between the inner surfaces of the fireproof sheet 5 and the flame-retardant sheet 4 facing each other. The thickness, shape, size, material, arrangement, and number of supports 47 are determined as appropriate for defining a predetermined clearance between the fireproof sheet 5 and the flame-retardant sheet 4. For example, the supports 47 in FIG. 4 defining the clearance are two rod-like plates located adjacent to the lateral ends of the battery holder 60 between the fireproof sheet 5 and the flame-retardant sheet 4. As shown in the figure, when the fireproof sheet 5 and the flame-retardant sheet 4 are located on the upper and lower surfaces of the battery holder 60, the supports 47 are also located on the upper and lower surfaces of the battery holder 60. The supports 47 are formed from hard rubber, such as non-foam hard chloroprene rubber sheet. Each discharge duct 20 redirects the high-temperature jet substance passing through the flame-retardant sheet 4 on the surface of the fireproof sheet 5 to direct a part of the jet substance to the surface of the flame-retardant sheet 4. The discharge duct 20 also causes the remaining part of the jet substance to flow in the longitudinal direction of the discharge duct 20 and be discharged outside the outer case 2. The jet substance moving onto the surface of the flame-retardant sheet 4 lowers its temperature with the flame-retardant sheet 4 evaporating, and flows into the discharge duct 20 again to be discharged outside the case. The supports 47 located between the fireproof sheet 5 and the flame-retardant sheet 4 cause outer surfaces of the battery block 10 to be pressed against the inner surfaces of the outer case 2, increasing the impact strength and vibration resistance of the battery block 10.

The outer case 2 shown in the enlarged cross-sectional view in FIG. 7 includes clearances on both sides of the fireproof sheet 5. An outer discharge duct 21 is located between the fireproof sheet 5 and the inner surface of the outer case 2. The fireproof sheet 5 has multiple transmission holes 51 for transmitting the jet substance to allow the jet substance to flow from the discharge duct 20 into the outer discharge duct 21 through the transmission holes 51. The transmission holes 51 are open at positions away from the through-holes 45 in the flame-retardant sheet 4, rather than at positions facing the through-holes 45. This prevents the jet substance from linearly passing through the through-holes 45 and the transmission holes 51 and allows the jet substance passing through the through-holes 45 to be dispersed in the discharge duct 20 and then flow into the outer discharge duct 21 through the transmission holes 51. The flame-retardant sheet 4 shown in the exploded perspective view in FIG. 4 has the through-holes 45 in portions facing the first end faces 15 of the battery cells 1 (end faces with the openings 12a of the discharge valves 12). The fireproof sheet 5 has the transmission holes 51 in portions facing the bottom surfaces of the battery cells 1 (bottom surfaces of the battery cells 1). The outer case 2 with this structure causes the jet substance flowing into the discharge duct 20 through the through-holes 45 in the flame-retardant sheet 4 to collide with the inner surface of the fireproof sheet 5, diffuse in the discharge duct 20, and be guided to the outer discharge duct 21 through the transmission holes 51. The outer discharge duct 21 discharges the jet substance flowing into the outer discharge duct 21 outside the outer case 2. The jet substance is dispersed into the multiple transmission holes 51 and flows into the outer discharge duct 21. The jet substance is further dispersed in the outer discharge duct 21 and discharged outside the case through the multiple discharge openings 23 in the outer case 2. The outer case 2 includes a label 29 attached on its surface to close the discharge openings 23. The label 29 is detached by the jet substance to allow the jet substance to be discharged outside the outer case 2.

The fireproof sheets 5 adjacent to the respective discharge ducts 20 protect the inner surfaces of the outer case 2. This allows plastic with lower heat resistance to be used as the thermoplastics for the outer case 2, and also allows the side plates 25 in the outer case 2 located outward from the respective discharge ducts 20 to be thinner to prevent damage on the outer case 2 caused by the jet substance. Additionally, the two-layer structure including the discharge ducts 20 inward from the respective fireproof sheets 5 and the outer discharge ducts 21 outward from the respective fireproof sheets 5 can reduce thermal issues on the outer case 2 caused by the jet substance more effectively. Each of the upper and lower parts of the outer case 2 includes the fireproof sheet 5 adjacent to the discharge duct 20 to protect its inner surface and prevent thermal issues on the outer case 2 caused by the jet substance. However, the discharge duct 20 may not include the fireproof sheet 5. The outer case 2 with higher heat resistance can prevent thermal issues on the outer case 2 caused by the jet substance.

### Flame-Retardant Sheet 4

Each flame-retardant sheet 4 melts and evaporates with the heat energy of the high-temperature jet substance, and absorbs the heat energy. The flame-retardant sheet 4 is a multilayer sheet 4a including the foam sheet 41 formed by foaming a flame-retardant material, and the flame-retardant non-foam film 42 thinner than the foam sheet 41 stacked on one surface of the foam sheet 41. The flame-retardant sheet 4 includes the non-foam film 42 facing the first end faces 15 of the battery cells 1, and the foam sheet 41 facing the discharge duct 20. The flame-retardant sheet 4 has the through-holes 45 in portions facing the openings 12a of the discharge valves 12 to allow the jet substance discharged through the openings 12a of the discharge valves 12 to flow into the discharge duct 20 through the through-holes 45. The flame-retardant sheet 4 includes the non-foam film 42 stacked on the lead plates 3 to face the first end faces 15 of the battery cells 1. The flame-retardant sheet 4 has the cutout clearances 46 facing portions between adjacent battery cells 1.

The battery pack 100 shown in the exploded perspective view in FIG. 4 includes, on surfaces of the battery holder 60, flat stacking surfaces 17 on which the flame-retardant sheets 4 are stacked with the lead plates 3 between the battery holder 60 and the flame-retardant sheets 4. The stacking surfaces 17 are located on two surfaces of the battery holder 60 on which the first end faces 15 and the bottom surfaces of the battery cells 1 are on the same planes. The battery holder 60 in FIG. 4 includes the multiple stacking surfaces 17 having the same outer shapes as the lead plates 3, and the partition walls 61 located between adjacent stacking surfaces 17. The partition walls 61 protrude from the battery holder 60 and are received between adjacent lead plates 3. The partition walls 61 are located between adjacent lead plates 3 to insulate the lead plates 3 having different potentials. The partition walls 61 are also guided by the cutout clearances 46 in the flame-retardant sheets 4 stacked on the lead plates 3 to prevent the battery cells 1 from inducing thermal runaway of the adjacent battery cells 1.

The non-foam film 42 is thinner than the foam sheet 41 and has high heat resistance, and may be a polyimide film with a heat resistance temperature of 450 °C or higher. However, the non-foam film 42 in one or more embodiments of the present invention is not limited to a polyimide film, and may be a film with high heat resistance, such as a plastic film including a fluororesin film and a silicone film, or a metal film. The non-foam film 42 may be a thin film with a film thickness of 200 µm or less, or more specifically, 100 µm or less to allow the flame-retardant sheet 4 to be thinner. However, the non-foam film 42 being too thin reduces the heat resistance to the jet substance. The non-foam film 42 may thus have a thickness of 20 µm or greater, or more specifically, 30 µm or greater.

The foam sheet 41 is a closed-cell foam with high heat resistance, and may be a chloroprene rubber foam. The closed-cell foam sheet of chloroprene rubber can effectively prevent thermal issues caused by the high-temperature, high-pressure jet substance when having a thickness of about 1 mm. The closed-cell foam sheet 41 has higher heat resistance with numerous closed cells each defining an independent closed space surrounded by flame-retardant thin films inside the foam sheet 41. The jet substance passing through the foam sheet 41 while melting and evaporating the foam sheet 41 cannot permeate the cells without evaporating the flame-retardant thin films surrounding the cells, unlike open-cell foam layers. The jet substance thus evaporates the thin films defining the cells and permeates the cells to evaporate and permeate the foam sheet 41.

The above flame-retardant sheet 4 including the non-foam film 42 stacked on one surface of the foam sheet 41 has a film thickness of 1 mm, and produces the effect of preventing damage caused by thermal-runway, similar to the effect produced with a foam sheet having a film thickness of 4 mm on which no non-foam film is stacked. In other words, the flame-retardant sheet 4 including the non-foam film 42 stacked on the foam sheet 41 has 1/4 of the thickness of such a foam sheet while producing a similar effect of preventing thermal issues.

In a verification test using multiple battery cells each being a lithium-ion battery with an outer diameter of 22 mm, a total length of 70 mm, and a capacity of 5000 mA or greater, specific battery cells (cells with thermal runaway) underwent local thermal runaway. The flame-retardant sheet on the surfaces of the cells with thermal runaway melted and evaporated. This flame-retardant sheet includes a foam sheet of chloroprene rubber (Inoac chloroprene rubber C4350) with a thickness of 1 mm and a non-foam film of polyimide with a thickness of 50 µm bonded to one surface of the foam sheet. In this case, local areas of the flame-retardant sheet facing the battery cells undergoing thermal runaway (cells with thermal runaway) evaporated and absorbed the heat energy from the jet substance. This prevented thermal issues caused by the jet substance. In the above flame-retardant sheet, portions of the non-foam film and the foam sheet evaporate to absorb a large amount of heat energy from the jet substance. However, in the flame-retardant sheet, the foam sheet alone may evaporate to absorb the heat energy from the jet substance, with no non-foam film evaporating.

### INDUSTRIAL APPLICABILITY

The above aspects of the present invention can be effectively used as a battery pack that prevents thermal issues caused by a high-temperature jet substance discharged through a discharge valve in a battery cell.

### REFERENCE SIGNS LIST

100, 900 battery pack
1 battery cell
1A cylindrical battery
2 outer case
2A, 2B divisional case
3 lead plate
4 flame-retardant sheet
4a multilayer sheet
5 fireproof sheet
10 battery block
12 discharge valve
12a opening
13 electrode
15 first end face
17 stacking surface
20 discharge duct
21 outer discharge duct
23 discharge opening
24 surface plate
25 side plate
26 end face plate
27 engagement protrusion
28 joint tab
28a engagement hole
29 label
30 lead body
31 connection arm
32 first connection arm
33 second connection arm
34 connecting portion
35 weld
36 passage clearance
41 foam sheet
42 non-foam film
45 through-hole
46 cutout clearance
47 support
51 transmission hole
60 battery holder
61 partition wall
62 insertion cylinder
63 electrode opening
901 battery cell
902 outer case
912 discharge valve
912a opening
940 heat-resistant plate
941 flat heat-resistant plate
942 L-shaped heat-resistant plate

## Claims

1. A battery pack, comprising:
a battery block including a plurality of battery cells, the plurality of battery cells including discharge valves having openings on first end faces of the plurality of battery cells; and
an outer case accommodating the battery block, the outer case having
a discharge duct between the outer case and the first end faces of the plurality of battery cells, the discharge duct being a duct for a jet substance discharged through the openings of the discharge valves, and
a flame-retardant sheet between the discharge duct and the first end faces of the plurality of battery cells, the flame-retardant sheet being a multilayer sheet including a foam sheet being flame retardant and a non-foam film stacked on a surface of the foam sheet, the non-foam film being flame retardant, having higher heat resistance than the foam sheet, and being thinner than the foam sheet, the flame-retardant sheet having, in portions of the flame-retardant sheet facing the openings of the discharge valves, through-holes through which the jet substance passes, the non-foam film in the flame-retardant sheet facing the first end faces of the plurality of battery cells, the foam sheet in the flame-retardant sheet facing the discharge duct.

2. The battery pack according to claim 1, wherein
the foam sheet is a foam body including closed-cells.

3. The battery pack according to claim 2, wherein
the foam sheet is a foam body of heat-resistant rubber.

4. The battery pack according to claim 3, wherein
the foam sheet is a foam body of chloroprene rubber.

5. The battery pack according to claim 3, wherein
the foam sheet is a foam body of silicone rubber.

6. The battery pack according to claim 1, wherein
the non-foam film is a polyimide film.

7. The battery pack according to claim 1, wherein
the non-foam film is a fluororesin film.

8. The battery pack according to claim 1, wherein
the foam sheet has a thickness of 2 mm or less.

9. The battery pack according to claim 1, wherein
the non-foam film has a thickness of 200 µm or less.

10. The battery pack according to claim 1, wherein
the flame-retardant sheet includes the foam sheet and the non-foam film configured to evaporate with the jet substance to absorb heat energy.

11. The battery pack according to claim 1, wherein
the outer case includes a fireproof sheet adjacent to the discharge duct, and the discharge duct is between the fireproof sheet and the flame-retardant sheet.

12. The battery pack according to claim 1, wherein
the outer case includes a fireproof sheet adjacent to the discharge duct,
the discharge duct is between the fireproof sheet and the flame-retardant sheet,
the outer case includes an outer discharge duct between the fireproof sheet and an inner surface of the outer case, and
the fireproof sheet has a transmission hole through which the jet substance discharged through the discharge duct is guided to the outer discharge duct.

13. The battery pack according to any one of claims 1 to 12, wherein
the battery block includes a battery holder holding the plurality of the battery cells in position,
the flame-retardant sheet has a cutout clearance between adjacent battery cells of the plurality of battery cells, and
the battery holder includes a partition wall integral with the battery holder, and the partition wall is guided by the cutout clearance.
